# EUROPEAN PATENT SPECIFICATION

(11) **EP 0 979 597 B1**
(45) Date of publication and mention of the grant of the patent: **24.07.2002**
(21) Application number: 98919333.9
(22) Date of filing: 29.04.1998
(51) Int. Cl.: H05B 33/08, F21S 4/00, B61L 5/18

(54) **TRAFFIC SIGNALS**
VERKEHRSLICHTSIGNAL
FEUX DE SIGNALISATION

(30) Priority: 30.04.1997 GB 9708861
(43) Date of publication of application: 16.02.2000
(73) Proprietor: Signal House Limited, Bedfordshire LU7 8UH (GB)
(72) Inventor: BEARFIELD, George, Joseph, Luton, Bedfordshire LU1 3QL (GB); WAREING, James, Ian, Carlton, Bedfordshire MK43 7LN (GB); ROBINSON, Max, Hawes, North Yorkshire DL8 3ND (GB)
(74) Representative: Howe, Steven
(86) International application number: GB9801242
(87) International publication number: WO9849872

(56) References cited:
- WO-A-95/12512
- DE-A- 4 305 585
- FR-A- 2 426 381
- FR-A- 2 586 844
- FR-A- 2 631 102
- FR-A- 2 711 884
- FR-A- 2 724 749
- GB-A- 1 574 387
- GB-A- 2 226 875
- US-A- 4 182 977

## Description

### BACKGROUND TO THE INVENTION

This invention relates to traffic control light' signals. It is particularly directed to a light signal which is more reliable, efficient and versatile than a conventional filament lamp-based signal.

### PRIOR ART

Light signals are commonly used to control rail, road and airborne traffic. A conventional signal consists of a filament lamp which emits white light, a lens system and a colour filter. The energy efficiency of conventional filament lamps is low, with only 1 to 2% of the input electrical energy being converted to light energy. The efficiency is further reduced when a colour filter is used, which allows only a fraction of the white light spectrum produced by the filament to be transmitted. Furthermore, conventional filament lamps have a short life and so need replacing regularly.

When the filament of such a light fails, it is necessary to go through the costly procedure of arranging for one or more people to travel to the signal location to replace the lamp. This can be a particularly dangerous operation when carried out close to a railway line. Furthermore, when a light fails there is a danger to traffic which can no longer be controlled properly. For rail control signals, it is known to use lamps having two filaments. When one filament fails, the other filament will still give some light so the signal can continue to operate, but the light output will be reduced visibly compared to the normal operation of the lamp to indicate the lamp requires replacement. This does not increase the life of the lamp, but does give an indication when thelamp is about to fail allowing its replacement before the signal fails completely.

It is known, for example from GB-A-2208026, to use an array of light emitting diodes (LEDs) in place of a filament lamp in a traffic control light signal. LEDs are significantly more efficient than filament light sources, converting around 10% of the input power into light energy. Also, LEDs are available in a range of colours, and therefore a filter may not be required, which would otherwise decrease the light output intensity and therefore the efficiency of the light signal. The high intensity LEDs currently available enable the light output level of filaments to be matched using a manageable number of devices.

### SUMMARY OF THE PRESENT INVENTION

According to the present invention, a traffic signal comprises:
an array of light emitting diodes (LEDs);
a monitoring system for monitoring at least one of:
   the intensity of light emitted by the LEDs and comparing this with a threshold; and,
   the state of the LEDs to determine when an LED has failed; and,
a controller for producing a control signal for control of the traffic signal dependent upon the result of the monitoring by the monitoring system.

With the traffic signal according to the present invention, the known advantages of an LED array compared to a filament lamp are achieved. The addition of monitoring and feedback control according to the present invention allows the illumination of the traffic signal to be maintained consistently over a longer period than is possible with known LED arrays. This monitoring and control is beneficial as the intensity of light emitted by an LED for a given driving current will decrease with the age of the LED, and the overall intensity of light emitted by the LED array will decrease as individual LEDs in the array fail. The monitoring can also predict accurately when an LED array needs replacing, thereby allowing replacement before the failure of the signal. This reduces the dangers associated with uncontrolled traffic movement. Furthermore, when a person replaces one signal, it is possible to determine other nearby signals which will require replacement shortly and to replace these at the same time, thereby reducing the time spent travelling to replace signals and the associated danger.

Depending upon the size of the light signal, the LED light array according to the present invention may typically include between 100 and 200 individual LEDs. To reduce manufacture costs and complexity, it is preferred that only some of the individual LEDs are monitored, for example only about 5% of the total number of LEDs are monitored. This still gives acceptable control of the overall light array in most circumstances. In this case it is preferred that a number of LEDs are grouped together, and that at least one LED in each group is monitored.

The control signal generated by the controller may be sent to a central control associated with a number of signal lights where the overall state of the light array can be determined and displayed and a decision can be taken as to whether the light array is acceptable or whether replacement is required. Preferably, the control signal is additionally or alternatively used in a feedback path to control the driving of the LEDs to compensate for variations in the intensity of light from the array determined by the monitoring system. In this case, the state may be selectively sent to the central control only when it is determined that a predetermined number of LEDs has failed, or when the detected light intensity falls below a predetermined level.

The intensity of illumination from an LED is dependent on the average current which drives the LED. Accordingly, the intensity of illumination emitted from an LED can be increased by increasing the average drive current. Where the LEDs are grouped for monitoring, the same drive current is preferably used to drive all LEDs in the same group. Different drive currents can be applied to different groups.

Where the light intensity is controlled by control of the drive current, it is preferred that the drive current is a pulsed current. Providing the frequency of the pulsed current is sufficiently high, the turning on and off of the LEDs will not be perceived by the human eye. In this case, the average current can be varied by adjustment of the relative ON and OFF periods of the driving current. The pulsed current may be in the form of a square wave. Alternatively, the magnitude of the drive current can be increased, in which case the drive current can be a steady current.

Advantageously the initial drive current is below the maximum drive current of the LEDs as this allows the drive current to be increased during the life of the light signal to compensate for any reduction in the light intensity. Where the drive current is a pulsed signal, the initial drive current is preferably selected so the maximum peak current required to obtain an acceptable average current is low enought so it will not tend to shorten the life of the LEDs.

Where LEDs are pulsed on and off, it is beneficial to energise different LEDs or groups of LEDs alternately. This gives an improved visual impression of a constant light source.

Alternatively or additionally, the number of LEDs in the light array which are driven can be controlled by the controller, for example where the intensity of illumination emitted falls or when it is determined that one or more of the LEDs has failed, additional LEDs may be driven to compensate.

Each LED is advantageously connected in series with a resistor which acts to limit the current flowing through the LED. This avoids excessive currents flowing through the LEDs which will otherwise shorten the life of the LED. Each LED, or where the LEDs are grouped together, each group of LEDs may have an associated semiconductor switch and a common tail resistor. The switch is used to operate the LED or group of LEDs. To determine the state of the LED or state of the LEDs in the group, the potential difference across the common tail resistor is measured by a voltage level detector. A failure of an LED can be determined from a change in the detected voltage or by comparison with a predetermined threshold.

Where the light intensity emitted from the LEDs is monitored, the monitoring system includes a photosensor for producing a signal indicative of the emitted light intensity, and a comparator for comparing this signal with a predetermined threshold. In this case, the predetermined threshold advantageously corresponds to a percentage of the light intensity initially emitted by the LED or group of LEDs, and preferably corresponds to at least 80% and more preferably at least 95% of the initial light intensity. This allows a comparison to be made between the current intensity and original intensity to determine any degradation of the signal, and to try and maintain a consistent intensity level.

To avoid erroneous determinations and control due to changes in the ambient light level, preferably the monitoring system includes a compensator to compensate for any ambient light. This compensator may include a means to shut-out ambient light, or may include a means for determining the level of ambient light and subtracting this from the determined intensity. This may include subtracting the measured intensity when the LED is not energised from the intensity when the LED is energised.

The intensity of light emitted from the LED array is advantageoulsy controlled also depending upon the ambient light level. For example the intensity may be increased when the ambient light is bright to help the signal to be seen, and reduced when there is little ambient light to reduce the risk of blinding a driver.

Preferably the beam profile of the traffic signal matches a predetermined, required, beam profile, for example the beam profile of the conventional traffic signal which the signal is to replace. The beam profile, which includes the shape of the beam and relative intensity of parts of the beam, is advantageously set by controlling the relative signals driving different LEDs or groups of LEDs to control the relative intensity emitted in accordance with the drive control described above. This allows the beam profile to be adjusted in use by changing the driving signal applies to the LEDs or to groups of LEDs. The drive signals may be changed by software which allows the beam profile to be changed easily, quickly and optionally remotely. Alternatively or additionally, the beam profile can be set by having a different spacing of LEDs in different areas of the array, and/or by providing optical elements such as lenses or prisms associated with different LEDs or groups of LEDs. Where optical elements are provided, these may be formed and mounted individually or integrally formed in a single optical unit having different optical properties at different locations. This eases assembly. The optical elements may be moulded, for example using injection moulding techniques. The beam profile may also depend upon the orientation of LEDs, or the distance between the LEDs and the associated optical element.

Preferably the light array has a beam profile with a generally central region having a small cone angle of high intensity. The cone angle of the central region is preferably less than 5°, and more preferably is between 1° and 2°. This gives a high intensity light beam which can clearly be seen at a large distance, but which, due to its small cone angle, is very directional to minimise possible interference with other signals. The axis of the central beam may be normal to the surface of the light signal, but may be at any desired angle for any particular application.

The central beam is preferably surrounded by a beam having a lower intensity and greater divergence. This will allow the signal light to be seen outside the limited angular range of the central beam, but the lower intensity minimises interference with other signals. Advantageously, a number of outer beams are provided.

Preferably the beam profile of the light signal also includes a bright strip or wedge-shaped beam directed so that a driver of a stationary vehicle waiting beside the signal can see the signal. Preferably the angular position of this bright strip is adjustable for different signal locations, for example by software control of the drive current to the LEDs.

Each of the LEDs advantageously emit light of a predetermined wavelength. This avoids the need for a colour filter to be provided to cause the signal to emit light of a predetermined colour and thereby improves the efficiency of the signal light. This is also advantageous in that sunlight can be reflected from a coloured filter given an appearance that the signal light is on. The absence of a filter avoids this problem, thereby reducing the danger of a signal being read incorrectly.

### BRIEF DESCRIPTION OF DRAWINGS

Figure 1 shows a front view of a light emitting diode (LED) array;
Figure 2 shows a cross-section through the LED of Figure 1 taken along the line A-A;
Figure 3 shows a side view of a typical beam profile from the LED array of Figures 1 and 2;
Figure 4 shows a schematic view of a monitoring and control circuit; and,
Figures 5 and 6 show circuit diagrams of monitoring and control circuits.

### DETAILED DESCRIPTION OF A PREFERRED EXAMPLE

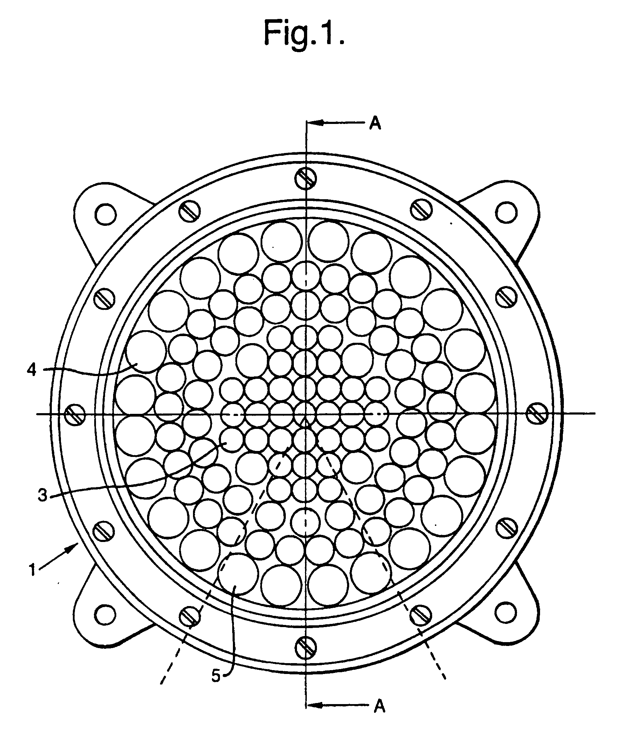

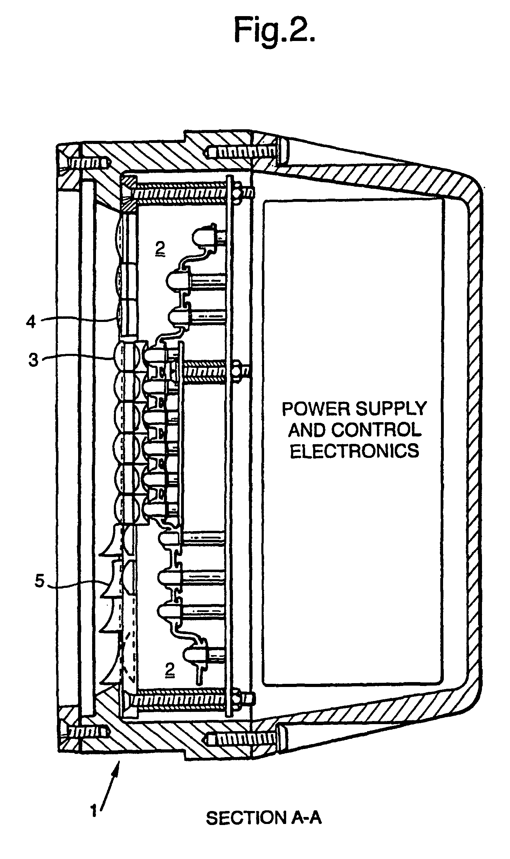

Figures 1 and 2 show respectively a front view and cross-section through a signal light according to the present invention. As shown in Figure 2, the signal light comprises a housing within which are provided an array of light emitting diodes (LEDs) 2.

An optical unit comprising different optical elements 3,4,5 is provided in front of the LED array. As shown best in Figure 1, the LEDs 2 and associated optical elements 3,4,5 are arranged in a generally circular array.

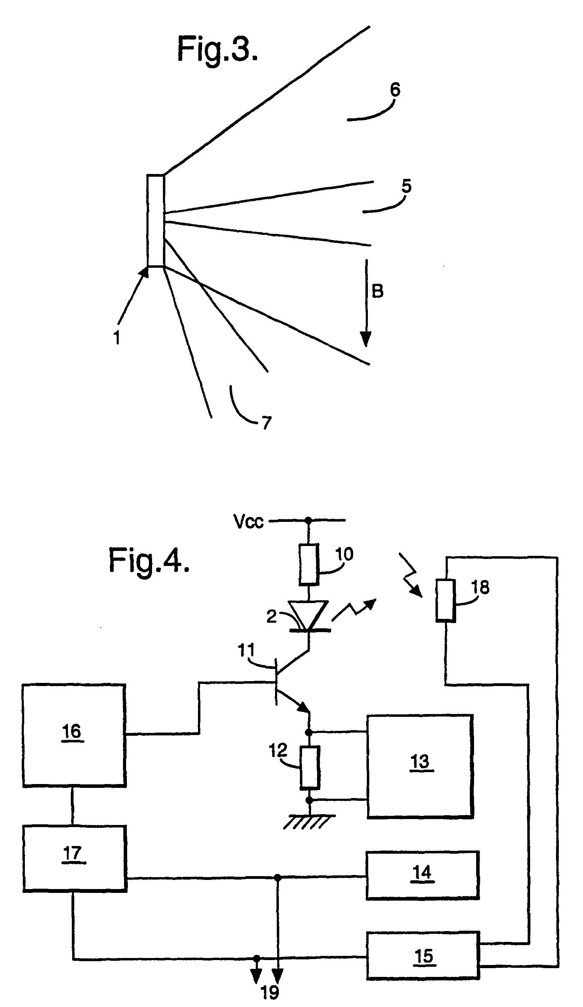

The LEDs 2 are arranged in groups. A central group of LEDs 2 are each provided behind associated first optical elements 3 which direct the light emitted from the LEDs 2 in a narrow beam having a small cone angle of between 1° and 2°. This central beam 8 is best shown in Figure 3. Surrounding this first group of LEDs 2 is a second group of LEDs which are disposed further behind associated optical elements 4 and 5 than the first group of LEDs. This spacing between the optical elements 4,5 and LEDs 2 causes deviation of the light emitted from the LEDs, and the optical elements 4 further diverge this light giving a secondary ring beam 6 around the central beam 8. The secondary ring beam 6 has a diminishing intensity with distance from the beam axis in the direction shown by the arrow B. The number of LEDs 2 provided per unit area of the signal light in this outer group is lower than that in the central group, and accordingly the light beam in this outer region is of lower intensity than that in the central region. The third set of optical elements 5 diverts the light from the associated LEDs 2 into a wedge-shaped beam. This beam has a higher light intensity than the secondary ring beam 6 and is directed to the position of a driver in a stationary vehicle beside this signal light.

The optical elements 3,4,5 are integrally formed by injection moulding techniques for ease of assembly.

The control circuitry for the LED array is shown in Figure 4. A number of LEDs 2 (only one of which is shown) are connected to a power supply Vcc through respective current limiting resistors 10 in parallel. The LEDs 2 are controlled commonly by a transistor 11 which switches on to pass a current through the LEDs 2 to energise them. The switching of the transistor 11 is controlled by a square wave generator 16 which initially produces a square wave having a duty cycle with an ON:OFF ratio of 70:30. Accordingly, the LEDs 2 are energised for 70% of the time, and de-energised for the remaining 30% of the time in accordance with the drive signal from the square wave generator 16. The voltage across a common tail resistor 12 is determined by a voltage detector 13 which outputs the detected voltage to a comparator 14 to compare the voltage against a predetermined threshold. Where one or more of the LEDs 2 controlled by the transistor 11 has failed, there will be change in the detected voltage compared to the predetermined threshold, and accordingly the existence of a failed LED 2 is determined. The LEDs 2 controlled by the transistor 11 are all in the same group, and form a sub-group within the group.

A photosensor, for example a light dependent resistor 18 or photodiode is associated with at least one of the LEDs 2 in the group or sub-group. The resistance of the light dependent resistor 18 is dependent upon the light incident upon the photosensor 18. By monitoring and comparing this with a predetermined threshold in a comparator 15 corresponding to the light intensity on the photosensor, a signal depending upon the difference between the threshold level and the currently detected level is produced. The LED 2 whose output is monitored is mounted on the same section of the PCB as the other LEDs 2 in the sub-group.

The outputs from both comparators 14 and 15 are sent to a central control unit 19 common to a number of signal lights where the intensity and status of each group or sub-group of LEDs 2 is displayed and monitored to determine whether the array requires replacement. Additionally, the results of the comparisons are supplied to a frequency controller 17 which controls the frequency and/or duty cycle of the square waves generated by the square wave generator 16. In particular, where it is determined that the intensity of light emitted by an LED 2 or a group or sub-group of LEDs 2 as detected by the photosensor 18 has fallen below a predetermined level, or where it is determined that one or more LEDs 2 in the group or sub-group has failed, the relative ON:OFF time of the square wave is increased. By increasing the relative ON:OFF time of the duty cycle, the average current driving the LEDs 2 in the group or sub-group is increased, and accordingly the intensity of light emitted from the group or sub-group will be increased. Accordingly compensation is made automatically for a reduction in intensity due to one or more failed LEDs 2 in a group or sub-group, or where the intensity of light emitted from the individual LEDs 2 in the group or sub-group has reduced when compared to the light originally emitted due to ageing of the LEDs 2 or other factors.

In case the LED 2 monitored is unrepresentative of the LEDs 2 in the sub-group, an additional LED 2 is monitored, and the intensity of light output from that LED compared with a threshold. The result of this comparison is not fedback to control the drive current driving the LEDs 2, but if the detected intensity is outside an acceptable range, a control signal is sent to the central control to indicate there is a fault in the intensity monitoring system or with the LED 2 whose output is monitored primarily. This means that if the monitored LED 2 is unrepresentative of the other LEDs 2 in the sub-group, this will be determined and identified as a fault. This provides an additional check without requiring the additional control circuitry to control the drive current based on the determined intensity of light output from two or more LEDs 2 in a sub-group.

Although in the preferred example of the present invention there is monitoring of both the intensity of light emitted from LEDs 2 and monitoring of the status of LEDs 2 to determine any which failures, it will be appreciated that there is an advantage over the prior art in monitoring only one of these parameters.

The control circuit is additionally controlled by a microprocessor. This enables different groups and/or sub-groups of LEDs 2 to be driven differently to control the beam profile emitted by the signal light, for example by increasing the average drive current to LEDs 2 in the centre of the array to give the high intensity central beam 5.

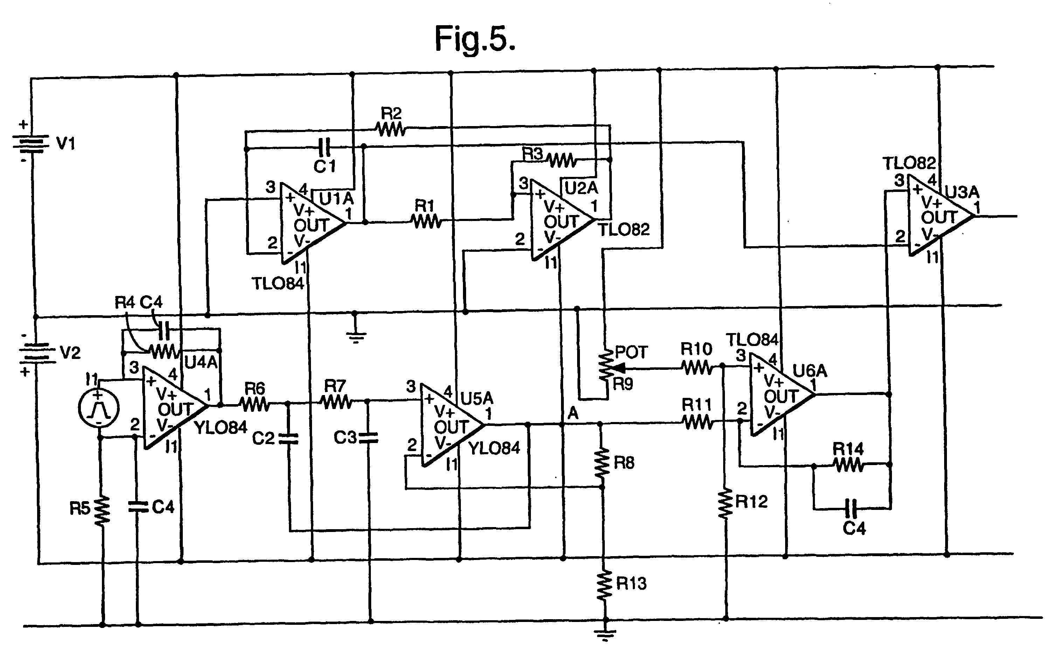

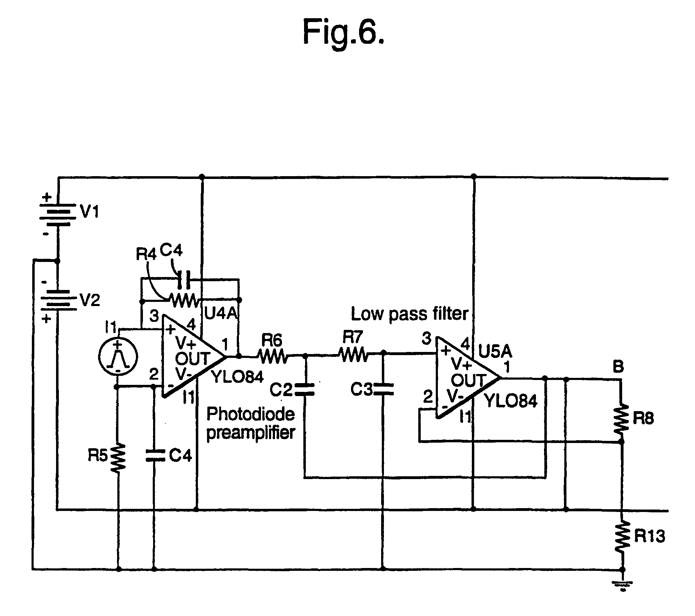

A detailed circuit diagram is shown in Figure 5 for the monitoring and control circuit for monitoring the light intensity of an LED 2 and controlling the drive current based on this monitoring, and Figure 6 shows a detailed circuit diagram for the monitoring of another LED 2 in the sub-group to generate a signal indicating an error in the main monitoring and control system.

## Claims

1. A traffic signal comprising:
an array of light emitting diodes (LEDs) (2);
a monitoring system (15,18; 13,14) for monitoring at least one of:
the intensity of light emitted by the LEDs (2) and comparing this with a threshold; and,
the state of the LEDs (2) to determine when an LED (2) has failed;
a controller (16,17) for producing a control signal for control of the traffic signal dependent upon the result of the monitoring by the monitoring system (15,18; 13,14); and,
a feedback path (16) to control the driving of the LEDs (2) to compensate for variations in the intensity of light from the array as determined by the monitoring system (15,18; 13,14).

2. A traffic signal according to Claim 1, in which the monitoring system (15,18; 13,14) monitors only some of the LEDs (2).

3. A traffic signal according to Claim 2, in which the LEDs (2) are divided into a plurality of groups, and in which the monitoring system (15,18; 13,14) monitors at least one LED (2) in each group.

4. A traffic signal according to any one of the preceding claims, in which the control signal generated by the controller (17) is sent to a central control associated with a number of signal lights.

5. A traffic signal according to Claim 4, in which the control signal is selectively sent to a central control associated with a number of signals only when it is determined that a predetermined number of LEDs (2) has failed, or when the detected light intensity falls below a predetermined level.

6. A traffic signal according to any one of the preceding claims, in which the amplitude of the drive current is controlled to compensate for variations in the intensity of light from the array.

7. A traffic signal according to any one Claims 1 to 5, in which the drive current for driving LEDs (2) or groups of LEDs (2) is a pulsed current.

8. A traffic signal according to Claim 7, in which the pulsed current is a square wave.

9. A traffic signal according to any one of Claims 6 to 8, in which different LEDs (2) or groups of LEDs (2) are energised alternately.

10. A traffic signal according to any one of the preceding claims, in which the monitoring system (15,18) includes a compensator to compensate for any ambient light.

11. A traffic signal according to any one of the preceding claims, in which the beam profile of the traffic signal light matches a predetermined, required, beam profile corresponding to the beam profile of the conventional traffic signal.

12. A traffic signal according to any one of the preceding claims, in which the relative signals driving different LEDs (2) or groups of LEDs (2) are controlled by the controller (16,17) to control the beam profile of the traffic signal light.

13. A traffic signal according to any one of the preceding claims, in which the LEDs (2) in different areas of the light array have a differential spacing to control the beam profile of the traffic signal light.

14. A traffic signal according to any one of the preceding claims, further comprising optical elements (3,4,5) associated with different LEDs (2) or groups of LEDs (2) to control the beam profile of the traffic signal light.

15. A traffic signal according to Claim 14, in which the optical elements (3,4,5) are integrally formed in a single optical unit having different optical properties at different locations.

16. A traffic signal according to any one of the preceding claims, in which the beam profile of the light array has a generally central region (8) having a small cone angle of high intensity.

17. A traffic signal according to Claim 16, in which the cone angle of the central region (8) of the beam is between 1° and 2°.

18. A traffic signal according to Claim 16 or 17, in which the central beam (8) is surrounded by a beam having a lower intensity and greater divergence.

19. A traffic signal according to any one of Claims 16 to 18, in which the beam profile includes a bright strip or wedge-shaped beam (7) directed so that a driver of a stationary vehicle waiting beside the signal can see the signal.

20. A traffic signal according to Claim 19, in which the angular position of the bright strip or wedge-shaped beam (7) is adjustable for different signal locations.

## Patentansprüche

1. Verkehrssignal, das Folgendes umfasst:
eine Anordnung von lichtemittierenden Dioden (LED) (2);
ein Überwachungssystem (15, 18; 13, 14) zum Überwachen von wenigstens einem der Folgenden:
der Helligkeit des von den LED (2) emittierten Lichtes und Vergleichen dieser mit einem Schwellenwert, und
dem Zustand der LED (2) zum Bestimmen, wann eine LED (2) ausgefallen ist,
einen Controller (16, 17) zum Erzeugen eines Steuersignals zum Steuern des Verkehrssignals in Abhängigkeit von dem Ergebnis der Überwachung durch das Überwachungssystem (15, 18; 13, 14) und
einen Rückkopplungsweg (16) zum Steuern der Aristeuerung der LED (2) zum Ausgleichen von vom Überwachungssystem (15, 18; 13, 14) bestimmten Variationen der Helligkeit des Lichtes von der Anordnung.

2. Verkehrssignal nach Anspruch 1, bei dem das Überwachungssystem (15, 18; 13, 14) nur einige der LED (2) überwacht.

3. Verkehrssignal nach Anspruch 2, bei dem die LED (2) in eine Mehrzahl von Gruppen eingeteilt sind und bei dem das Überwachungssystem (15, 18; 13, 14) wenigstens eine LED (2) in jeder Gruppe überwacht.

4. Verkehrssignal nach einem der vorangehenden Ansprüche, bei dem das vom Controller (17) erzeugte Steuersignal an eine zentrale Steuerung, die mit einer Anzahl von Verkehrssignalen assoziiert ist, gesendet wird.

5. Verkehrssignal nach Anspruch 4, bei dem das Steuersignal selektiv nur dann an eine mit einer Anzahl von Signalen assoziierte zentrale Steuerung gesendet wird, wenn bestimmt wird, dass eine vorbestimmte Anzahl von LED (2) ausgefallen ist, oder wenn die detektierte Lichtstärke unter einen vorbestimmten Grad fällt.

6. Verkehrssignal nach einem der vorangehenden Ansprüche, bei dem die Amplitude des Ansteuerungsstroms zum Ausgleichen von Variationen der Helligkeit des Lichtes von der Anordnung gesteuert wird.

7. Verkehrssignal nach einem der Ansprüche 1 bis 5, bei dem der Ansteuerungsstrom zum Ansteuern von LED (2) oder Gruppen von LED (2) ein Pulsstrom ist.

8. Verkehrssignal nach Anspruch 7, bei dem der Impulsstrom eine Rechteckwelle ist.

9. Verkehrssignal nach einem der Ansprüche 6 bis 8, bei dem verschiedene LED (2) oder Gruppen von LED (2) abwechselnd erregt werden.

10. Verkehrssignal nach einem der vorangehenden Ansprüche, bei dem das Überwachungssystem (15, 18) einen Kompensator zum Kompensieren von Umgebungslicht hat.

11. Verkehrssignal nach einem der vorangehenden Ansprüche, bei dem das Strahlprofil des Verkehrssignallichtes mit einem vorbestimmten erforderlichen Strahlprofil übereinstimmt, das dem Strahlprofil des konventionellen Verkehrssignals entspricht.

12. Verkehrssignal nach einem der vorangehenden Ansprüche, bei dem die relativen Signale, welche verschiedene LED (2) oder Gruppen von LED (2) ansteuern, vom Controller (16, 17) zum Steuern des Strahlprofils des Verkehrssignallichtes gesteuert werden.

13. Verkehrssignal nach einem der vorangehenden Ansprüche, bei dem die LED (2) in verschiedenen Bereichen der Lichtanordnung eine unterschiedliche Beabstandung zum Steuern des Strahlprofils des Verkehrssignallichtes haben.

14. Verkehrssignal nach einem der vorangehenden Ansprüche, das ferner optische Elemente (3, 4, 5) hat, die zum Steuern des Strahlprofils des Verkehrssignallichtes mit verschiedenen LED (2) oder Gruppen von LED (2) assoziiert sind.

15. Verkehrssignal nach Anspruch 14, bei dem die optischen Elemente (3, 4, 5) in eine einzelne optische Einheit integriert sind, die verschiedene optische Eigenschaften an verschiedenen Stellen hat.

16. Verkehrssignal nach einem der vorangehenden Ansprüche, bei dem das Strahlprofil der Lichtanordnung einen allgemein zentralen Bereich (8) mit einem kleinen Kegelwinkel hoher Lichtstärke hat.

17. Verkehrssignal nach Anspruch 16, bei dem der Kegelwinkel des zentralen Bereichs (8) des Strahles zwischen 1° und 2° beträgt.

18. Verkehrssignal nach Anspruch 16 oder Anspruch 17, bei dem der zentrale Strahl (8) von einem Strahl mit einer geringeren Lichtstärke und größerer Aufweitung umgeben ist.

19. Verkehrssignal nach einem der Ansprüche 16 bis 18, bei dem das Strahlprofil einen hellen streifen- oder keilförmigen Strahl (7) hat, der so gerichtet ist, dass ein neben dem Signal wartender Fahrer eines stehenden Fahrzeugs das Signal sehen kann.

20. Verkehrssignal nach Anspruch 19, bei dem die Winkelposition des hellen streifen- oder keilförmigen Strahles (7) für verschiedene Signalstandorte einstellbar ist.

## Revendications

1. Un feu de signalisation comprenant :
un groupe de diodes électoluminescentes (LED) (2);
un système de contrôle (15,18; 13,14) pour contrôler au moins l'un des éléments suivants :
l'intensité de la lumière émise par les LED (2) avec comparaison relativement à une valeur seuil; et
l'état des LED (2) pour déterminer toute LED (2) défectueuse;
un contrôleur (16,17) pour produire un signal de commande pour commander le feu de signalisation en fonction du résultat du contrôle par le système de contrôle (15,18; 13,14); et
une chaîne de rétroaction (16) pour contrôler l'attaque des LED (2) afin de compenser les variations d'intensité de la lumière émise par le groupe, telle que déterminée par le système de contrôle (15,18; 13.14).

2. Un feu de signalisation selon la Revendication 1, dans lequel le système de contrôle (15,18; 13,14) ne contrôle que certaines des LED (2).

3. Un feu de signalisation selon la Revendication 2, dans lequel les LED (2) sont divisées en une pluralité de groupes, et dans lequel le système de contrôle (15,18; 13,14) contrôle au moins une LED (2) dans chaque groupe.

4. Un feu de signalisation selon l'une quelconque des renvendications précédentes, dans lequel le signal de commande engendré par le contrôleur (17) est envoyé à un centre de commande associé à plusieurs feux de signalisation.

5. Un feu de signalisation selon la Revendication 4, dans lequel le signal de commande n'est envoyé sélectivement à un centre de commande associé à plusieurs signaux que lorsqu'il est déterminé qu'un nombre prédéterminé de LED (2) sont défectueuses, ou quand l'intensité de la lumière détectée chute en dessous d'un niveau prédéterminé.

6. Un feu de signalisation selon l'une quelconque des revendications précédentes, dans lequel l'amplitude du courant d'attaque est contrôlée pour compenser les variations d'intensité de la lumière émise par le groupe.

7. Un feu de signalisation selon l'une quelconque des revendications 1 à 5, dans lequel le courant d'attaque qui commande les LED (2) ou groupes de LED (2) est un courant pulsé.

8. Un feu de signalisation selon la Revendication 7, dans lequel le courant pulsé est un signal en onde carrée.

9. Un feu de signalisation selon l'une quelconque des Revendications 6 à 8, dans lequel des LED (2) différentes ou des groupes différent de LED (2) sont excités alternativement.

10. Un feu de signalisation selon l'une quelconque des revendications précédentes, dans lequel le système de contrôle (15, 18) inclut un compensateur pour compenser tout éclairage ambiant éventuel.

11. Un feu de signalisation selon l'une quelconque des revendications prcédentes, dans lequel le profil de faisceau du feu de signalisation est adapté à un profil de faisceau requis prédéterminé qui correspond au profil de faisceau d'un feu de signalisation conventionnel.

12. Un feu de signalisation selon l'une quelconque des revendications précédentes, dans lequel les signaux relatifs qui attaquent des LED (2) différentes ou des groupes différents (2) de LED sont commandés par le contrôleur (16,17) pour commander le profil de faisceau de lumière du feu de signalisation.

13. Un feu de signalisation selon l'une quelconque des revendications précédentes, dans lequel les LED (2) dans différentes zones du groupe de LED ont des espacements différents pour contrôler le profil de faisceau de lumière du feu de signalisation.

14. Un feu de signalisation selon l'une quelconque des revendications précédentes, qui comprend de plus des éléments optiques (3,4,5) associés à des LED (2) différentes ou à des groupes différents de LED (2) pour contrôler le profil de faisceau de lumière du feu de signalisation.

15. Un feu de signalisation selon la Revendication 14, dans lequel les éléments optiques (3,4,5) sont formés intégralement en une seule unité optique ayant des propriétés optiques différentes à des endroits différents.

16. Un feu de signalisation selon l'une quelconque des revendications précédentes, dans lequel le profil de faisceau du groupe de LED a une région généralement centrale (8) ayant un petit angle de forte intensité au sommet du cône.

17. Un feu de signalisation selon la Revendication 16, dans lequel l'angle au sommet du cône de la région centrale (8) est de 1° à 2°.

18. Un feu de signalisation selon la Revendication 16 ou 17, dans lequel le faisceau central (8) est entouré par un faisceau ayant une intensité moindre et une divergence plus grande.

19. Un feu de signalisation selon l'une quelconque des Revendications 16 à 18, dans lequel le profil de faisceau inclut un faisceau brillant en forme de bande ou de coin (7), dirigé de sorte qu'un conducteur d'un véhicule stationnaire en attente à côté du feu peut voir le signal.

20. Un feu de signalisation selon la Revendication 19, dans lequel la position angulaire du faisceau brillant en forme de bande ou de coin (7) peut être ajusté en fonction de divers emplacements du feu de signalisation.
